# EUROPEAN PATENT SPECIFICATION

(11) **EP 2 910 349 B1**
(45) Date of publication and mention of the grant of the patent: **17.04.2019**
(21) Application number: 12886567.2
(22) Date of filing: 18.10.2012
(51) Int. Cl.: B26B 1/00, B26B 5/00, B26B 27/00

(54) **MULTIFUNCTIONAL EFFICIENT PROTECTION CUTTER**
EFFIZIENTER MULTIFUNKTIONELLER SCHUTZ EINER SCHNEIDEVORRICHTUNG
DISPOSITIF DE COUPE À PROTECTION EFFICACE MULTIFONCTION

(43) Date of publication of application: 26.08.2015
(73) Proprietor: Tong, Jianlun, (No.1 hospital Water river road) Changping Distr. Beijing Beijing (CN)
(72) Inventor: Tong, Jianlun, (No.1 hospital Water river road) Changping Distr. Beijing Beijing (CN)
(74) Representative: Sun, Yiming
(86) International application number: PCT/CN2012/083149
(87) International publication number: WO 2014/059646

(56) References cited:
- CN-A- 1 903 526
- CN-U- 201 645 502
- CN-U- 201 755 842
- CN-Y- 2 240 423
- DE-U1- 29 812 413
- FR-A- 1 183 477
- US-A- 642 585
- US-A- 2 589 911
- US-A- 5 456 010
- US-A- 5 974 671
- US-A1- 2008 209 737

## Description

### Field

The present invention involves a cutter consisting of several blade sets and a blade rack for holding the blade sets. After the blade sets are assembled with the blade rack, they may be used to cut food material, mainly in the cooking field, and applied in other fields.

### Background

People usually need to cut vegetables into slices, shreds and dices when cooking. Traditional kitchen tools are laborious and it is hard to control the accuracy during processing. Sometimes our hand may be accidentally cut, or the vegetables are sticky to the tool. In case of spicy vegetables, we have to endure their sting to eyes, which makes us very uncomfortable. Sometimes, different ways of processing are required, and sometimes the food material should be cut on different planes. The rub bed on the market may squeeze the vegetables during processing, resulted in the bad taste of them. Electric cutting tools consumes too much electricity, and are hard to maintain, which are not suitable in households or small canteens. In general, some energy is consumed by the material being cut, some is consumed by the tool edge and the chopping board, and so the latter two are badly worn, badly reducing their service life. The structure of the utility patent No. 200920255826.7 is that several tools are combined together in parallel, and there is one handle on either side, so both hands are required to operate. The structure of the utility patent No. 200920001966.1 is that several tools are combined in parallel in the same container. In these two patents, the distance between the blades is fixed, and the blade unit cannot be changed, so the processed material only has a single size. The structure of the utility patent No. 201020293206.5 is that several tools are combined together in parallel, and the distance between the blades can be adjusted. But its structure is so complex, and the adjustment distance is hard to control. Besides, the tool is inconvenient to maintain. And there is only one handle which is set on the outside, not easy to operate.

### Technical Problems

To solve these problems, the new-type tool is developed. It consists of several blade units with a protection plate and the blade carrier for the blade units. The tool may be operated by one hand without electricity, greatly improving the processing speed, accuracy, quality and sanitation, and ensuring the user's safety and comfort. The protection plate plays a role in protecting the tool edge. When the tool is being used, part of the useful energy is consumed by the material being cut, and another part of the energy is consumed on the tool edge, the elastic part of the tool edge, the chopping board and the protection plate. The tool edge and the protection plate share the useless and harmful loss of energy, thus greatly extending the service life of the tool edge and the chopping board. Cutting is the function of the tool edge, and it nearly has nothing to do with the tool body, so a thin thread made of special elastic material may be used to substitute for the tool edge. To simplify the description, it is declared hereby: the tool edge according to the present invention includes the elastic tool edges or the elastic thin threads instead of the tool edge. Specifically, the present invention is a new-type safe tool that can cut the food material into slices, shreds or dices within 1 to 3 times. For each individual blade unit: 1. If the distances between individual blades are equal to each other, the food material being cut will be equally divided; 2. If the distances between individual blades are not equal to each other, the food material being cut will be not equally divided; 3. All the blades may be in the same size or different sizes. 4. Except for a few blades of which functions for stabilizing, the other blades may be substituted by the elastic thin threads playing the same role as the tool edge. The thin thread substituting for the tool edge is made of special material. Besides, the width of the tool edge or the diameter of the excircle of the cross-section of the thin thread is less than 3mm. Each of the blade units may set its own blade spacing, so as to obtain the cut food material with different sizes and thicknesses by changing the blade unit. The height of the protection plate shall be within 30mm and it should also be higher than that of the blade unit. The use of the protection plate as well as the elastic blade or the elastic thin thread instead of the tool edge, can greatly extend the service life of the tool edge or the thin elastic thread and the chopping board.

### Technical Solution

The present invention relates to a cutter tool comprising: a handle (1), a blade rack (2), and a blade set (3), wherein the handle (1) and the blade rack (2) are installed on the blade set (3),
wherein said blade set (3) has a peripheral protection plate (7) and several blades or thin threads (4), wherein each of the thin threads (4) or a sharp face of each of the blades is lower than a low end of the protection plate (7),
wherein each of the thin threads (4) or the blades has capability of elastic deformation, wherein said sharp face has an elasticity of less than 5 mm to ensure that the protection plate (7) protects the blade edge or the thin thread (4), wherein said elasticity is large enough so that said sharp face may be in a shadow of said protection plate (7), when the cutter tool is used on a surface of a chopping board which is not absolutely flat.

Definition of items: Sharp Face: refers to the cutting surface formed by all the tool edges or thin threads, with the meaning of sharp cutting surface. n: refers to any number less than 5, and may be a decimal. 'Bolt' and 'Nut': used for a visual description, they are only easily-accessible smooth cylinder and barrel without real threads.

As the chopping board may be not an absolutely-flat plane, the following methods for protecting the cutting edge:1. If the food material needs to be totally cut off, the sharp face is longer than the low end of the protection plate as much as n(mm). The elasticity of the sharp face shall be large enough so that the sharp face may be in the shadow of the protection plate. 2. Solely for the purpose of information it is also disclosed herein that if the food material needs to be basically cut off, the sharp face and the lower end of the protection plate should be in the same plane. The elasticity of the sharp face is only required to be within n (mm). 3. Solely for the purpose of information it is also disclosed herein that if the food material needs to be cut as tangled, the sharp face shall be n (mm) shorter than the lower end of the protection plate. The sharp face may be not elastic, or with the elasticity of several millimeters. Specifically, a new-type tool is composed of tool handles (1), blade rack (2) and blade sets (3). The tool handles (1) and the blade rack (2) are installed above the blade sets (3). The blade set (3) is composed of the protection plate (7) in outside and some blades. The sharp face formed by the tool edges (4) should fit well with the protection plate. The obtuse side formed by the blade back should be shorter than the protective plate over 1mm; each blade (4) has the capacity of elastic deformation within n (mm) so as to not let the protection plate (7) lose its function to protect the tool edge (4); each blade respectively has several small holes (10); on the outside of the protective plate, there is a "nut" (6) to be inserted. The end side face of the blade rack is the shape of 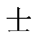 (" 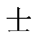 " is a Chinese character) or "t". The lower horizontal line of the shape of " 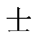 " is used to insert "bolt" (9), the vertical line of the shape of " 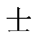 " is the blade carrier (2).The new-type tool mentioned above is characterized in: the shape of " 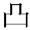 " (5) in the upper end of the blade unit protection plate slid into the shape of concave " 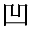 " (8) in the low end of the blade carrier, and the "bolt" (9) of the blade carrier is inserted into the "nut" (6) of the blade sets.

### Benefit Effects

1. Simple structure; thin, short and small blades; and processing material, energy and time saved; 2. Vegetables will not be stuck onto the blade, easy to operate, safe and comfortable, suitable for households, canteens, etc.; 3. Suitable for easily and quickly cutting special vegetables to disassemble and clean; 4. It can make the food material into slices or shreds by cutting for the first time; or into dices by cutting for the second or third time. No further chopping is needed, which retains the vegetable nutrients with to the greatest degree, greatly improving the work efficiency; 5. The combination of the protection plate and the elastic tool edge or the thin thread, greatly extends the service life of the tool edge or the thin thread and the chopping board, energy-saving and environmental protection; 6. Any person with one arm disabled can use it: the tool may be completely operated by one hand, without needing the support of the other hand; 7. Once the blade sets cannot work smoothly, it may be replaced with a new one, and the blade rack may be continuously used in the recycling form; 8. Because of the development of the present invention, the vegetable processing can also become a kind of art: you can quickly and easily perform various kinds of fancy processing and create many art patterns.

### BRIEF DESCRIPTION OF DRAWINGS:

All the figures are schematic, and the show or scale are not certainly accurate.

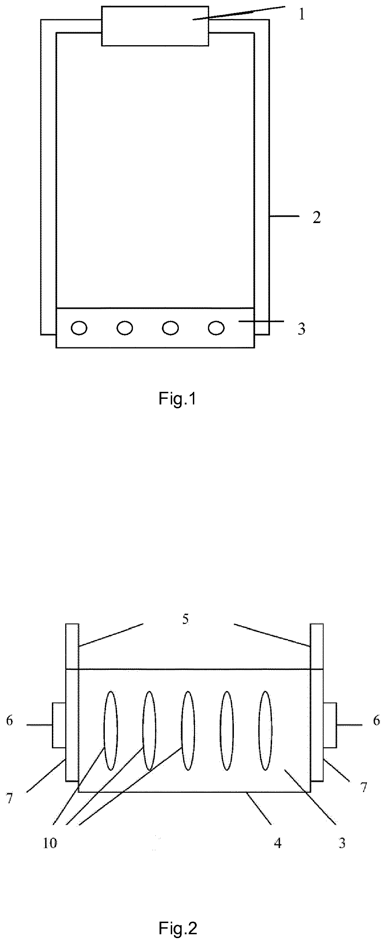

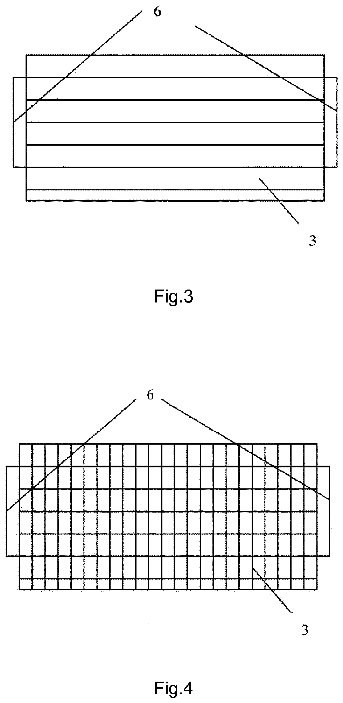

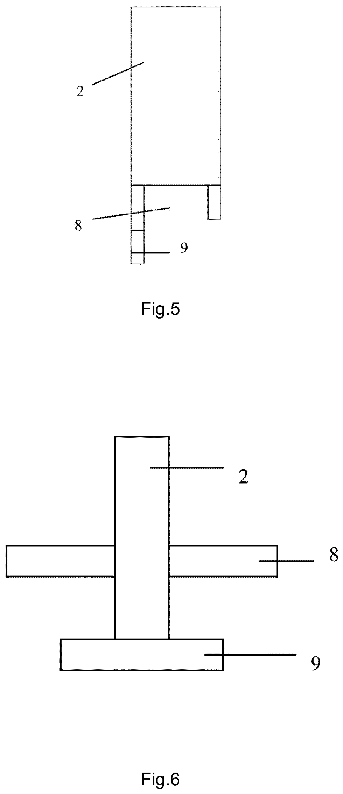

Figure 1 is the front view of the cutter: Figure 2 is the front view of the blade sets; Figure 3 is the top view of the blade sets for slicing; Figure 4 is the top view of the blade sets for shredding; and Figure 5 shows the slide way with the shape of reverse " 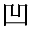 " in the left side of low end of the blade rack and the "bolt" (9) used for inserting; the figure on the right side of the lower end of the blade rack is symmetric to that on the left side; Figure 6 is the side view of the slideway with the shape of reverse " 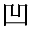 " in the low end of the blade rack and the "bolt" (9) used for inserting. LIST OF REFERENCES: 1-Tool handle, 2-blade rack, 3-Blade sets, 4-Tool edge or thin thread, 5-the projection with the shape of " 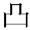 " of the protection plant, 6- the barrel as the nut for being inserted, 7-Protection plate, 8-skidway with the shape of reverse " 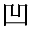 ", 9-the barrel as the bolt for inserting, 10-Small holes in the blade.

### The preferred embodiment according to the present invention

Many people like stuffed foods such as dumplings, steamed buns etc., but they are tired of so much work in stuffing preparation, and now the problem is solved with this tool: only a few times of cuttings is required in the same work which previously needed tens of minutes of labor. When the complete-cutoff shredding blade sets are used, a tool edge face with the cross section of 2mm² is formed by four adjacent edges with the spacing of 2mm; cutting for the first time can make the food material into shreds with the cross-section of 2mm², and after cutting for the second time, the shreds will become dices with the cross-section of 2mm². Further cutting or chopping is not required, and the nutrients of the vegetables will be retained to the greatest degree as well.

### Embodiments of the present invention

1. Particular embodiment: (1) Fig.3 shows the blade sets for slicing: cutting for the first time makes the food material into slices; for the second time, make the slices into shreds, and for the third time, make the shreds into dices.
2. The type of the cutter may be selected depending on the numbers of people; (1) for a family of 3-5 persons, the small-size cutter of the cross-section within 25cm² shall be used; (2) for canteens, the medium-size cutter of the cross-section of about 100cm² shall be used; and (3) for more people, the larger-size cutter shall be used.
3. Individual blade sets may be selected according to personal tastes or their tooth health conditions; some people like soft food, and some people like a little hard food; some people have good teeth and some people have bad teeth. (1) If all the people have the same demands, the spacing between the blades shall be designed to be equal. (2) The spacing between blades shall be different when the people have different demands. The spacing between some blades is larger, and the spacing between others is smaller.
4. The individual blade sets may be selected according to the food material to be cut: the meat needs to be completely cut off, so the blade sets with the sharp face longer than the protection plate shall be used. Solely for the purpose of information it is also disclosed herein that for the fruits and vegetables, the blade sets with the sharp face equal to or shorter than the protection plate could be used.
5. Comparison with the effects of competitive tools: (1) Let's take the example of cutting a potato: generally 10 times of cutting is required to make the potato become slices, 20 times of cutting required to make it become shreds, and 30 times of cutting required to make it become dices; but with this cutter according to the present invention, only one time of cutting is required for make slices, one or two times of cutting required for shreds and two or three times of cutting required for dices. (2) Even if a shredder is used, several times of cutting is required to get the desired shapes. In addition, the taste of the vegetables will be compromised since being squeezed during processing.
6. Suitable for cutting the vegetables with sting to eyes like onions and peppers: only 1 to 3 times of cutting is required for this work.
7. As also described herein solely for the purpose of information, if only one edge is used, then this cutter is a kind of new kitchen tool with a small blade.
8. The sharp face may be made into various shapes, in principle, it is possible as long as the shape is on a two-dimensional plane, but the processing with such a sharp face is kind of difficult: 1. Simple geometric shapes: triangle, square, pentalpha, quadrilateral, pentagon, etc., 2. Varieties of radian. Complex shapes such as pattern of small animals are also possible to be made.
9. The sharp faces may be three-dimensional: it is easy to make various shapes because the edges are not arranged in the same plane. For example, the sharp face may be designed as the star shape, with the middle part as the upward-concave arc shape. In this case, a tomato may be cut into pentalpha but the intermediate of the bottom are still connected with each other, which is easy to place and looks good.

## Claims

1. A cutter tool comprising: a handle (1), a blade rack (2), and a blade set (3), wherein the handle (1) and the blade rack (2) are installed on the blade set (3), wherein said blade set (3) has a peripheral protection plate (7) and several blades or thin threads (4), wherein each of the thin threads (4) or a sharp face of each of the blades is lower than a low end of the protection plate (7),
wherein each of the thin threads (4) or the blades has capability of elastic deformation, wherein said sharp face has an elasticity of less than 5 mm to ensure that the protection plate (7) protects the blade edge or the thin thread (4), wherein said elasticity is large enough so that said sharp face may be in a shadow of said protection plate (7), when the cutter tool is used on a surface of a chopping board which is not absolutely flat.

## Patentansprüche

1. Schneidwerkzeug, umfassend: einen Griff (1), ein Klingengestell (2) und einen Schneidsatz (3),
wobei der Griff (1) und das Klingengestell (2) auf dem Klingensatz (3) installiert sind,
wobei der Klingensatz (3) eine umlaufende Schutzplatte (7) und mehrere Klingen oder dünne Fäden (4) aufweist, wobei jeder der dünnen Fäden (4) oder eine scharfe Fläche jeder der Klingen niedriger ist als ein unteres Ende der Schutzplatte (7),
wobei jeder der dünnen Fäden (4) oder der Klingen ein elastisches Deformierungsvermögen aufweist, wobei die scharfe Fläche eine Elastizität von weniger als 5 mm aufweist, um sicherzustellen, dass die Schutzplatte (7) die Klingenkante oder den dünnen Faden (4) schützt, wobei die Elastizität groß genug ist, sodass die scharfe Fläche sich im Schatten der Schutzplatte (7) befinden kann, wenn das Schneidwerkzeug auf einer Oberfläche eines Schneidebretts verwendet wird, das nicht absolut flach ist.

## Revendications

1. Outil de coupe comprenant: un manche (1), un support de lames (2) et un ensemble de lames (3),
le manche (1) et le support de lames (2) étant installés sur l'ensemble de lames (3),
dans lequel ledit ensemble de lames (3) comporte une plaque de protection périphérique (7) et plusieurs lames ou fils fins (4), chacun des fils fins (4) ou une face tranchante de chacune des lames étant plus bas par rapport à une extrémité inférieure de la plaque de protection (7),
dans lequel chacun des fils fins (4) ou chacune des lames a la capacité de se déformer élastiquement, ladite face tranchante présente une élasticité inférieure à 5 mm pour assurer que la plaque de protection (7) protège le bord de lame ou le fils fins (4), ladite élasticité étant suffisamment grande pour permettre à ladite face tranchante de se trouver dans une ombre de ladite plaque de protection (7), lorsque l'outil de coupe est utilisé sur une surface d'une planche à découper pas forcément plate.
